# EUROPEAN PATENT APPLICATION

(11) **EP 4 604 612 A1**
(43) Date of publication of application: **20.08.2025**
(21) Application number: 23880063.5
(22) Date of filing: 22.09.2023
(51) Int. Cl.: H04W 28/14, H04W 28/02, H04L 47/28, H04L 47/30

(54) **METHOD AND DEVICE FOR AVOIDING PACKET LOSS DUE TO NETWORK SPEED DIFFERENCE IN WIRELESS COMMUNICATION SYSTEM**

(30) Priority: 17.10.2022 KR 20220133124; 21.10.2022 KR 20220136663
(71) Applicant: Samsung Electronics Co., Ltd., Suwon-si, Gyeonggi-do 16677 (KR)
(72) Inventor: HA, Taeho, Suwon-si, Gyeonggi-do 16677 (KR); YOON, Taiho, Suwon-si, Gyeonggi-do 16677 (KR); LEE, Donghoo, Suwon-si, Gyeonggi-do 16677 (KR); LEE, Jeongmin, Suwon-si, Gyeonggi-do 16677 (KR); CHOI, Jongchan, Suwon-si, Gyeonggi-do 16677 (KR)
(74) Representative: HGF
(86) International application number: PCT/KR2023/014516
(87) International publication number: WO 2024/085484

(57) **Abstract**

The present disclosure describes a method and device for avoiding packet loss due to network speed difference in a wireless communication system. A method of operating a first node in a wireless communication system according to various embodiments includes: determining the maximum transmission interval for a downlink data transfer state; transmitting a first DDRS including information about a first DBS to the second node; and receiving, from the second node, first downlink data determined based on the first DBS.

## Description

### [Technical Field]

The disclosure relates, generally, to a wireless communication system and, for example, to a method and a device for avoiding a packet loss in a wireless communication system.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency bands (e.g., 60GHz bands) so as to accomplish higher data rates. To decrease propagation loss of the radio waves and increase the transmission distance in the ultrahigh frequency bands, beamforming, massive multiple-input multipleoutput (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multipoints (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed. With the advance of wireless communication systems as described above, various services can be provided, and accordingly there is a need for schemes to smoothly provide these services. In particular, there is a need for a technology to support services newly requested in a wireless communication system.

Recently, with development of a communication system, a demand for a method for avoiding a packet loss in an NR system in which massive traffic is transmitted to reduce a load in a backhaul network increases. For example, efforts to provide a method for avoiding a packet loss also in a split bearer configuration of dual connectivity (DC) have been made.

### [Disclosure of Invention]

### [Technical Problem]

Embodiments of the disclosure may provide an apparatus and a method capable of effectively providing services in a wireless communication system.

### [Solution to Problem]

According to various example embodiments, provided is a method for operating a terminal and/or user equipment (UE) in a wireless communication system, where the method is performed by a first node in a wireless communication system, the method comprising: identifying a maximum transmission period of a downlink data delivery status (DDDS); transmitting, to a second node, a first DDDS including information on a first desired buffer size (DBS); and receiving, from the second node, first downlink data identified based on the first DBS, wherein the first DBS is identified based on at least one of the maximum transmission period or a size of an empty buffer of the first node.

According to various example embodiments, a method performed by a second node in a wireless communication system is provided, the method comprising: receiving, from a first node, a first downlink data delivery status (DDDS) including information on a first desired buffer size (DBS); and transmitting, to the first node, first downlink data corresponding to the first DBS, wherein the first DBS is identified based on at least one of a maximum transmission period of the first DDDS or a size of an empty buffer of the first node.

According to various example embodiments, a first node in a wireless communication system is provided, the first node comprising: a transceiver; a processor coupled with the transceiver; and memory storing instructions that, when executed by the processor, cause the first node device to: identify a maximum transmission period of a downlink data delivery status (DDDS), transmit a first DDDS including information on a first desired buffer size (DBS) to a second node, and receive first downlink data identified based on the first DBS from the second node, and wherein the first DBS is identified based on at least one of the maximum transmission period or a size of an empty buffer of the first node.

According to various example embodiments, a second node in a wireless communication system is provided, the second node comprising: a transceiver; a processor coupled with the transceiver; and memory storing instructions that, when executed by the processor, cause the second node device to: receive a first downlink data delivery status (DDDS) including information on a first desired buffer size (DBS) from a first node, and transmit first downlink data corresponding to the first DBS to the first node, and wherein the first DBS is identified based on at least one of a maximum transmission period of the first DDDS or a size of an empty buffer of the first node.

### [Advantageous Effects of Invention]

Certain Various example embodiments provide an apparatus and/or a method capable of effectively providing a newly requested service in a wireless communication system.

### [Brief Description of Drawings]

FIG. 1 is a diagram illustrating a wireless communication system according to various embodiments;
FIG. 2 is a block diagram illustrating an example configuration of a base station in a wireless communication system according to various embodiments;
FIG. 3 is a block diagram illustrating an example configuration of a UE in a wireless communication system according to various embodiments;
FIG. 4 is a diagram illustrating an example DC communication system according to various embodiments;
FIG. 5 is a diagram illustrating an example transmission path of a signal in a dual connectivity structure according to various embodiments;
FIG. 6 is a signal flow diagram illustrating an example operation of transmitting downlink user data according to various embodiments;
FIG. 7 is a signal flow diagram illustrating an example operation of transmitting a DDDS according to various embodiments;
FIG. 8 is a diagram illustrating an example operation in which a packet loss occurs according to various embodiments;
FIG. 9 is a signal flow diagram illustrating example flow of a signal when packet loss occurs according to various embodiments;
FIG. 10 is a flowchart illustrating an example DDDS transmission operation according to various embodiments; and
FIG. 11 is a signal flow diagram illustrating example flow of a downlink signal based on a maximum transmission period of a DDDS according to various embodiments of the disclosure.

### [Mode for the Invention]

Hereinafter, various example embodiments will be described in greater detail with reference to the accompanying drawings.

In describing the various embodiments, descriptions related to technical contents well-known in the art and not associated directly with the disclosure may be omitted. Such an omission of unnecessary descriptions is intended to avoid obscuring of the main idea of the disclosure and more clearly transfer the main idea.

For the same reason, in the accompanying drawings, some elements may be exaggerated, omitted, or schematically illustrated. Further, the size of each element may not completely reflect the actual size. In the drawings, identical or corresponding elements are provided with identical reference numerals.

The disclosure is not limited to the example embodiments set forth below, but may be implemented in various different forms. The following example embodiments are provided simply to provide a more complete disclosure. Throughout the disclosure, the same or like reference numerals designate the same or like elements. In describing the disclosure, a detailed description of known functions or configurations incorporated herein may be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the disclosure.

In the following description, a base station may refer to an entity that allocates resources to terminals, and may be at least one of a gNode B, an eNode B, a Node B, a base station (BS), a wireless access unit comprising circuitry, a base station controller comprising circuitry, and a node on a network. A terminal may include a user equipment (UE), a mobile station (MS), a cellular phone, a smartphone, a computer, or a multimedia system capable of performing communication functions. **In** the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the example embodiments may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, or other similar services. In addition, based on determinations by those skilled in the art, the example embodiments may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" may refer to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the various embodiments may include one or more processors.

In the following description, some of terms and names defined in the 3rd generation partnership project long term evolution (3GPP LTE)-based communication standards (e.g., standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

Hereinafter, the disclosure relates to a method and a device for performing channel estimation in a wireless communication system. For example, the disclosure provides a technology for enabling a base station to estimate, based on precoding matrix indication (PMI) feedback for effective channel estimation, the speed of a UE, and adaptively determining a DMRS according to the estimated speed of the UE in a wireless communication system.

Advantageous effects obtainable from the disclosure may not be limited to the above-mentioned effects, and other effects which are not mentioned may be clearly understood from the following descriptions by those skilled in the art to which the disclosure pertains.

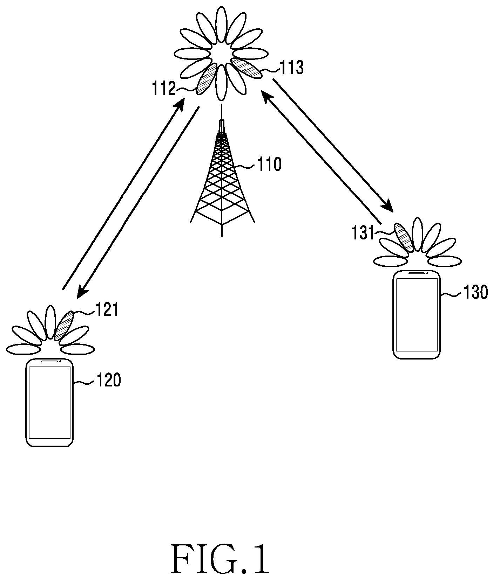

FIG. 1 is a diagram illustrating a wireless communication system according to various example embodiments. FIG. 1 illustrates a base station 110, a terminal/UE 120, and a terminal/UE 130, as parts of nodes using a radio channel in a wireless communication system. FIG. 1 illustrates only one base station, but may further include another base station that is the same as or similar to the base station 110. In this disclosure, terminal 120 may be referred to interchangeably with user equipment (UE).

The base station 110 is a network infrastructure that provides wireless access to the terminals 120 and 130. The base station 110 has coverage defined to be a predetermined geographic area based on the distance over which a signal may be transmitted. The base station 110 may be referred to as "access point (AP)", "evolved NodeB (eNodeB) (eNB)", "5th generation node (5G node)", "next generation NodeB (gNB)", "wireless point", "transmission/reception point (TRP)" in addition to "base station", or other terms having equivalent technical meanings.

Each of the terminal 120 and the terminal 130 is a device used by a user, and performs communication with the base station 110 via the radio channel. In some cases, at least one of the terminal 120 and the terminal 130 may be operated without involvement of a user. That is, at least one of the terminal 120 and the terminal 130 is a device that performs machine type communication (MTC) and may not be carried by a user. Each of the terminal 120 and the terminal 130 may be referred to as "user equipment (UE)", "mobile station", "subscriber station", "remote terminal", "wireless terminal", "mobile phone", "user device" in addition to "terminal", or other terms having equivalent technical meanings.

The base station 110, the terminal 120, and the terminal 130 may transmit and receive radio signals in a mmWave band (e.g., 28 GHz, 30 GHz, 38 GHz, and 60 GHz)). To improve a channel gain, the base station 110, the terminal 120, and the terminal 130 may perform beamforming. The beamforming may include transmission beamforming and reception beamforming. That is, the base station 110, the terminal 120, and the terminal 130 may assign a directivity to a transmission signal or a reception signal. To this end, the base station 110 and the terminals 120 and 130 may select serving beams 112, 113, 121, and 131 via a beam search procedure or a beam management procedure. After the serving beams 112, 113, 121, and 131 are selected, communication may then be performed via resources that are in quasi co-located (QCL) relationship with resources via which the serving beams 112, 113, 121, and 131 are transmitted.

When large-scale characteristics of a channel, via which a symbol on a first antenna port has been transferred, may be inferred from a channel via which a symbol on a second antenna port has been transferred, it may be evaluated that the first antenna port and the second antenna port are in a QCL relationship. For example, the large-scale characteristics may include at least one among a delay spread, a doppler spread, a doppler shift, an average gain, an average delay, and a spatial receiver parameter.

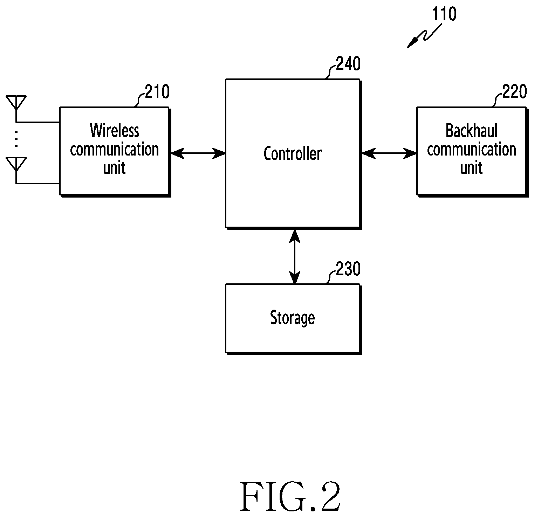

FIG. 2 is a block diagram illustrating an example configuration of a base station in the wireless communication system according to various example embodiments. The configuration illustrated in FIG. 2 may be understood as the configuration of the base station 110. The terms such as "~ unit", "~ device", "~ er", "~ or", etc. used hereinafter refer to a unit that processes at least one function or operation, which may be implemented by hardware or software, or a combination of hardware and software.

Referring to FIG. 2, the base station includes a wireless communication unit 210, a backhaul communication unit 220, a storage unit 230, and a controller 240.

The wireless communication unit 210 performs functions for transmitting or receiving signals through a radio channel. For example, the wireless communication unit 210 performs a conversion function between a baseband signal and a bit string according to the physical layer standard of a system. For example, during data transmission, the wireless communication unit 210 generates complex symbols by encoding and modulating a transmission bit stream. In addition, during data reception, the wireless communication unit 210 reconstructs the received bit string through demodulation and decoding of the baseband signal.

In addition, the wireless communication unit 210 (which may comprise communication circuitry) up-converts the baseband signal into a radio frequency (RF) band signal and then transmits the RF band signal through an antenna, and downconverts an RF band signal received through the antenna into a baseband signal. To this end, the wireless communication unit 210 may include a transmission filter, a reception filter, an amplifier, a mixer, an oscillator, a digital to analog converter (DAC), an analog to digital converter (ADC), and the like. In addition, the wireless communication unit 210 may include multiple transmission and reception paths. Furthermore, the wireless communication unit 210 may include at least one antenna array including multiple antenna elements.

In terms of hardware, the wireless communication unit 210 may include a digital unit and an analog unit, and the analog unit may include multiple sub-units according to operating power, operating frequency, and the like. The digital unit may be implemented with at least one processor (e.g., a digital signal processor (DSP)).

The wireless communication unit 210 transmits or receives a signal as described above. Accordingly, all or a part of the wireless communication unit 210 may be referred to as "a transmitter", "a receiver", or "a transceiver". In the following description, transmission and reception performed via a radio channel are used in a meaning including processing performed as described above by the wireless communication unit 210.

The backhaul communication unit 220 (which may comprise communication circuitry) provides an interface to perform communication with other nodes within the network. For example, the backhaul communication unit 220 converts, into a physical signal, a bit stream transmitted from the base station to another node, for example, another access node, another base station, a higher node, a core network, etc., and converts a physical signal received from another node into a bit stream.

The storage unit 230 stores data, such as a basic program, an application program, and configuration information for operations of the base station. The storage unit 230 may include a volatile memory, a nonvolatile memory, or a combination of a volatile memory and a nonvolatile memory. The storage unit 230 provides stored data in response to a request of the controller 240.

The controller 240, which may comprise at least one processor comprising processing circuitry, may control overall operations of the base station. For example, the controller 240 transmits or receives a signal via the wireless communication unit 210 or backhaul communication unit 220. Further, the controller 240 records and reads data in the storage unit 230. In addition, the controller 240 may perform functions of a protocol stack required by the communication standard. According to another implementation example, the protocol stack may be included in the wireless communication unit 210. To this end, the controller 240 may include at least one processor.

According to various embodiments, the controller 240 may control the base station to perform operations based on the various embodiments described in greater detail below.

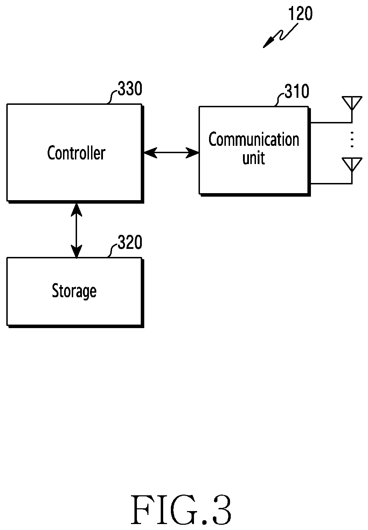

FIG. 3 is a block diagram illustrating an example configuration of a terminal in the wireless communication system according to various embodiments. The configuration illustrated in FIG. 3 may be understood as the configuration of the terminal 120. The terms such as "~ unit", "~ device", "~ er", "~ or", etc. used hereinafter refer to a unit that processes at least one function or operation, which may be implemented by hardware or software, or a combination of hardware and software.

Referring to FIG. 3, the terminal includes a communication unit 310, a storage unit 320, and a controller 330.

The communication unit 310 (which may comprise communication circuitry) performs functions for transmitting or receiving a signal via a radio channel. For example, the communication unit 310 performs a conversion function between a baseband signal and a bit string according to the physical layer standard of a system. For example, during data transmission, the communication unit 310 generates complex symbols by encoding and modulating a transmission bit stream. In addition, during data reception, the communication unit 310 reconstructs the received bit string through demodulation and decoding of the baseband signal. In addition, the communication unit 310 up-converts the baseband signal into a radio frequency (RF) band signal and then transmits the RF band signal through an antenna, and downconverts an RF band signal received through the antenna into a baseband signal. For example, the communication unit 310 may include a transmission filter, a reception filter, an amplifier, a mixer, an oscillator, a DAC, an ADC, and the like.

In addition, the communication unit 310 may include multiple transmission and reception paths. Furthermore, the communication unit 310 may include at least one antenna array including multiple antenna elements. In terms of hardware, the communication unit 310 may include a digital circuit and an analog circuit (e.g., radio frequency integrated circuit (RFIC)). Here, the digital circuit and the analog circuit may be implemented in a single package. Further, the communication unit 310 may include multiple RF chains. Furthermore, the communication unit 310 may perform beamforming.

The communication unit 310 transmits or receives a signal as described above. Accordingly, all or a part of the communication unit 310 may be referred to as "a transmitter", "a receiver", or "a transceiver". **In** the following description, transmission and reception performed via a radio channel are used in a meaning including processing performed as described above by the communication unit 310.

The storage unit 320 stores data, such as a basic program, an application program, and configuration information for operations of a terminal. The storage unit 320 may include a volatile memory, a nonvolatile memory, or a combination of a volatile memory and a nonvolatile memory. The storage unit 320 provides stored data in response to a request of the controller 330.

The controller 330, which may comprise at least one processor comprising processing circuitry, may control overall operations of the terminal. For example, the controller 330 transmits or receives a signal via the communication unit 310. Further, the controller 330 records and reads data in the storage unit 320. In addition, the controller 330 may perform functions of a protocol stack required by the communication standard. To this end, the controller 330 may include at least one processor or microprocessor, or may be a part of the processor. In addition, a part of the communication unit 310 and the controller 330 may be referred to as a communication processor (CP).

According to various embodiments, the controller 330 may control a terminal to perform operations based on various embodiments described below.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

Traffic (e.g., traffic in a DL direction) transmitted from an input terminal may be transmitted to a reception terminal through network equipment (e.g., router). In this case, an input speed and an output speed of the router are different, the amount of output data may be small compared to the speed at which data is piled in a buffer of an output terminal, and thus a buffer overflow problem in which the buffer of the output terminal overflows may occur. For example, when the speed of the input terminal is 10 giga bit per second (Gbps), the speed of the output terminal is 1 Gbps and is thus different from that of the input terminal, and a speed mismatch problem occurs, the buffer overflow may occur. Accordingly, the greater the difference between the speed of the input terminal and the speed of the output terminal, the buffer overflow problem may get worse. In addition, a packet loss problem in which a part of traffic transmitted from the input terminal is lost by the buffer overflow may occur.

In an NR system, to resolve a disadvantage that coverage in which a service is provided by a base station (e.g., gNB) is narrow, a non-stand-alone (NSA) scheme may be considered. The NSA scheme may be a scheme of using the NR system together with the conventional LTE system. In the NSA scheme, a UE may use not only an eNB in the LTE system but also a gNB in the NR system. In the NSA scheme, the UE may have a dual connectivity (DC) structure enabling heterogeneous communication systems. In the various example embodiments of the disclosure, DC may be referred to as "dual connection" or "dual connectivity". In an embodiment, E-UTRA-NR dual connectivity (EN-DC) may be a scheme of using an LTE system connected to an LTE core network as a master node (MN) and using an NR system as a secondary node (SN). In an embodiment, NG-RAN E-UTRA-NR dual connectivity (NGEN-DC) may be a scheme of using an LTE system connected to a 5G core network as a master node (MN) and using an NR system as a secondary node (SN). However, the master node is not limited to a base station (e.g., eNB) in the LTE system, and may be a base station (e.g., gNB) in the NR system. In addition, the secondary node is not limited to a base station (e.g., gNB) in the NR system, and may be a base station (e.g., eNB) in the LTE system.

The buffer overflow problem in such a dual connectivity structure may also occur between a node (e.g., MeNB or MgNB) hosting a packet data convergence protocol (PDCP) entity and a node (e.g., SeNB or SgNB) corresponding thereto.

Hereafter, in various embodiments of the disclosure, methods for addressing the packet loss problem due to the buffer overflow which may occur in the dual connectivity structure are described. In addition, hereinafter, in the various example embodiments of the disclosure, the terms "deliver" and "transmit" may have the same meaning.

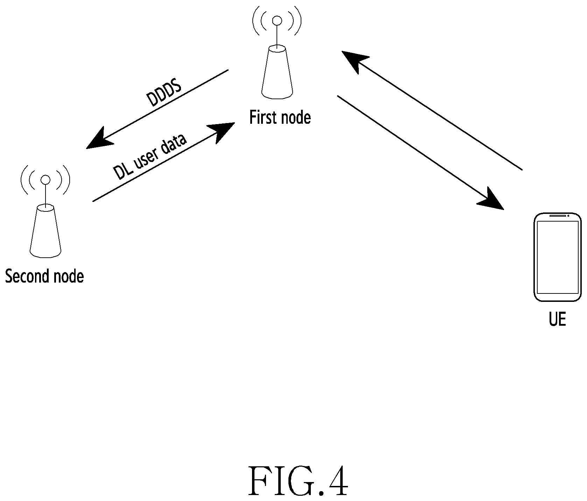

FIG. 4 is a diagram illustrating an example DC communication system according to various embodiments.

Referring to FIG. 4, a first node may transmit a message including information on downlink data delivery status to a second mode, and operations in which the second node having received the message including information on the downlink data delivery status transmits downlink data to the first node can be described. Hereinafter, in various embodiments of the disclosure, the message including information on the downlink data delivery status may be referred to as a downlink data delivery status (DDDS). For example, in a structure of the communication system of FIG. 4, a second node may be connected to a 5G core network (CN) via a backhaul network, and may be connected to the first node via an X2 interface. In this case, the second node may be a master node (e.g., MeNB or MgNB) hosting a PDCP (e.g., NR PDCP) entity, and the first node may be a secondary node (e.g., SeNB or SgNB) corresponding to the second node. The downlink data may be a downlink (DL) user plane transmitted and/or received on a user plane.

As an example embodiment, the first node may transmit a message (e.g., DDDS) including a downlink data delivery status to the second node, and the second node having received the DDDS may distribute, based on information included in the DDDS, traffic in a downlink direction. For example, the second node may transmit, based on information included in the DDDS, downlink user data (e.g., a PDCP protocol data unit (PDU)) to the first node. In addition, the first node may transmit the received downlink user data to a UE. In the DC structure, the UE may receive downlink user data from each of the first and second nodes through a split bearer, and the downlink user data transmitted from the first and second nodes may be collected and rearranged in a PDCP layer of the UE.

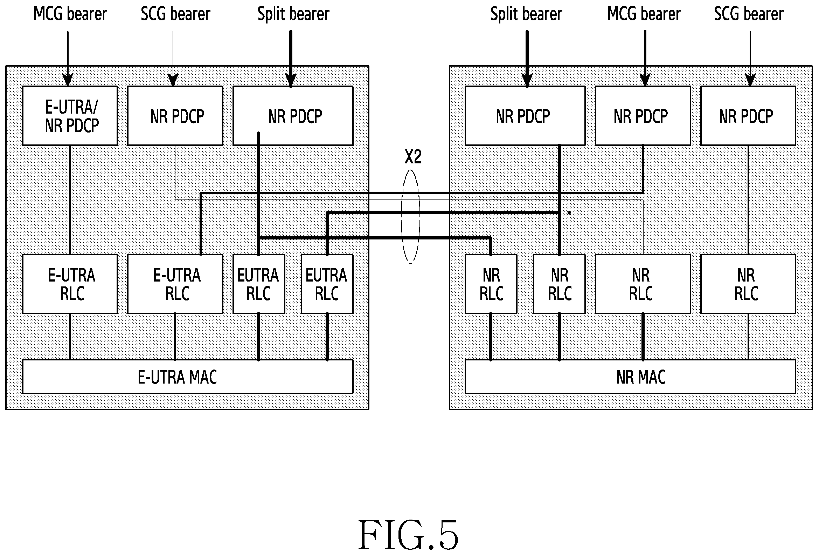

FIG. 5 is a diagram illustrating an example transmission path of a signal in a dual connectivity structure according to various embodiments.

Referring to FIG. 5, a flow of a downlink signal in a protocol stack of a master node and a secondary node in a dual connectivity structure can be described. In the dual connectivity structure, a UE may be connected to MeNB (or MgNB) and SgNB (or SeNB). The master node (e.g., MeNB or MgNB) may be connected to an evolved packet core (EPC) via an S1 interface or may be connected to a 5G core (5GC) via an N2 interface in the dual connectivity structure. The secondary node (e.g., SgNB or SeNB) connected to the master node (e.g., MeNB or MgNB) via an X2 or Xn interface may be a node for providing an additional radio resource for the UE.

The dual connectivity structure in which carrier aggregation (CA) is configured may include a master cell group (MCG) and a secondary cell group (SCG). In this case, the "cell group" may be a group of serving cells related to the MeNB (or MgNB) or the SgNB (or SeNB) in the dual connectivity structure. The "master cell group" may be a group of serving cells related to the MeNB (or MgNB), and may include a primary cell (PCell) and may selectively include one or more secondary cells (SCells) in the dual connectivity structure. The "secondary cell group may be a group of serving cells related to the SgNB (or SeNB), and may include a primary SCell (PSCell) and may selectively include one or more SCells.

An MCG bearer may be positioned only in the MeNB (or MgNB) to use only an MeNB (or MGNB) resource in the dual connectivity structure. An SCG bearer may be positioned only in the SeNB (or SgNB) to use an SeNB (or SgNB) resource in the dual connectivity structure. A split bearer may be positioned in both the MeNB (or MgNB) and the SgNB (or SeNB) to use both the MeNB (or MgNB) and SgNB (or SeNB) resources in the dual connectivity structure.

In an embodiment, in the dual connectivity structure, the split bearer may be split in a PDCP layer of the master node (e.g., MeNB or MgNB) connected to a core network (e.g., EPC or 5GC). For the split bearer, the master node and the secondary node may be connected via an X2 interface, and a signal transmitted via the split bearer may be transmitted from a PDCP layer of the master node to an RLC layer of the secondary node.

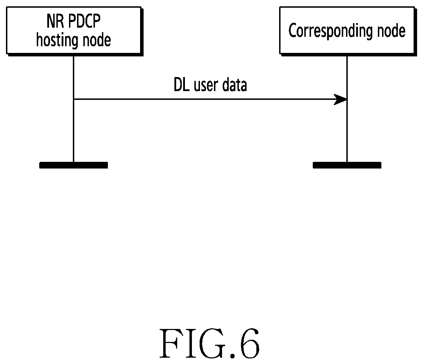

FIG. 6 is a signal flow diagram illustrating an example operation of transmitting downlink user data according to various embodiments.

Referring to FIG. 6, a procedure of providing NR-user (U) plane protocolspecific number information when a node hosting an NR PDCP entity (e.g., "node hosting NR PDCP") transmits user data (e.g., downlink user data) carrying a DL NR PDCP PDU to a node corresponding thereto (e.g., "corresponding node") can be described. Hereinafter, in an embodiment, the node hosting the NR PDCP entity may be the same node as the above-described second node of FIG. 5, and the corresponding node may be the same node as the above-described first node of FIG. 5.

The downlink user data transmitted to the corresponding node by the node hosting the NR PDCP entity may include at least one of pieces of information in Table 1 below.

**[Table 1]**

| **Information element (IE)** | **Octet number** |
|---|---|
| NR-U Sequence Number | 3 |
| DL discard NR PDCP PDU SN | 0 or 3 |
| DL discard Number of blocks | 0 or 1 |
| DL discard NR PDCP PDU SN start (first block) | 0 or 3 |
| Discarded Block size (first block) | 0 or 1 |
| ... | |
| DL discard NR PDCP PDU SN start (last block) | 0 or 3 |
| Discarded Block size (last block) | 0 or 1 |
| DL report NR PDCP PDU SN | 0 or 3 |
| Padding | 0-3 |

An NR user plane protocol using the downlink user data delivery procedure may be associated with a single radio bearer only. The node hosting the NR PDCP entity may allocate consecutive NR-U sequence numbers to transmitted NR-U packets, respectively. Accordingly, a new NR-U sequence number (SN) may be allocated to a retransmitted NR PDCP PDU. The node hosting the NR PDCP entity may display, on the corresponding node, whether the NR-U packet is retransmission of the NR PDCP PDU. The node hosting the NR PDCP entity may discard all NR PDCP PDUs up to a defined DL discard NR PDCP PDU SN, or may indicate the corresponding node to discard at least one block of the downlink NR PDCP PDU.

The corresponding node may detect (or identify) whether the NR-U packet has been lost, and may remember each sequence number after each NR-U packet is declared as "lost". The corresponding node may transmit the remaining NR PDCP PDU to the UE, and may remember the highest NR PDU sequence number among NR PDCP PDUs successfully delivered to the UE and the highest NR PDCP PDU number among NR PDCP PDUs transmitted to lower layers (e.g., one of a media access control (MAC) layer or a physical (PHY) layer).

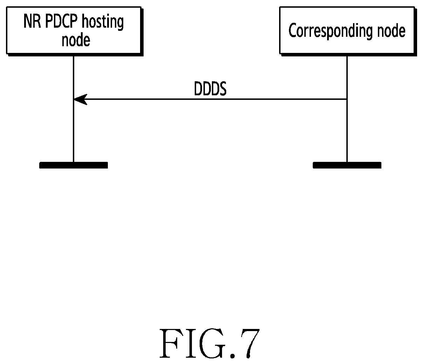

FIG. 7 is a signal flow diagram illustrating an example operation of transmitting a DDDS according to various embodiments.

Referring to FIG. 7, an operation in which a corresponding node transmits a DDDS to a node hosting an NR PDCP entity so that a flow of downlink user data can be controlled can be described. Hereinafter, in an embodiment, the node hosting an NR PDCP entity may be the same node as the above-described second node of FIG. 5, and the corresponding node may be the same node as the above-described first node of FIG. 5.

In an embodiment, a DDDS transmission procedure may be a procedure of providing feedback of the corresponding node to the node hosting the NR PDCP entity to enable the node hosting the NR PDCP entity to control a flow of downlink user data. In addition, the corresponding node may transmit, to the node hosting the NR PDCP entity, uplink user data for a related data radio bearer together with a DDDS frame in a general packet radio service (GPRS) tunneling protocol-user plane (GTP-U) PDU.

When determining to trigger feedback for the downlink user data delivery procedure (e.g., the procedure described in FIG. 6), the corresponding node may transmit the DDDS including at least one of the pieces of information included in Table 2 below to the node hosting the NR PDCP entity.

**[Table 2]**

| **IEs** | **Octet number** |
|---|---|
| Desired buffer size for the data radio bearer | 4 |
| Desired Data Rate | 0 or 4 |
| Number of lost NR-U Sequence Number ranges reported | 0 or 1 |
| Start of lost NR-U Sequence Number range | 0 or 6 |
| End of lost NR-U Sequence Number range | |
| Highest successfully delivered NR PDCP Sequence Number | 0 or 3 |
| Highest transmitted NR PDCP Sequence Number | 0 or 3 |
| Cause Value | 0 or 1 |
| Successfully delivered retransmitted NR PDCP Sequence Number | 0 or 3 |
| Retransmitted NR PDCP Sequence Number | 0 or 3 |
| Number of successfully delivered out of sequence PDCP Sequence Number range | 0 or 1 |
| Start of successfully delivered out of sequence PDCP Sequence Number range | 0 or 6 |
| End of successfully delivered out of sequence PDCP Sequence Number range | |
| NR-U Sequence Number of Polling Frame | 0 or 3 |
| Feedback Delay Result | 0 or 4 |
| Padding | 0-3 |

In an embodiment, the DDDS may include the following information among the pieces of information in Table 2.
a) "Highest successfully delivered NR PDCP Sequence Number": In a case of an "RLC acknowledge mode (AM)", the highest NR PDCP PDU sequence number among the NR PDCP PDUs (e.g., successfully transmitted NR PDCP PDUs remaining after excluding the retransmission NR PDCP PDU) received from the node hosting the NR PDCP entity and delivered to the UE.
b) "Desired buffer size for the data radio bearer": A desired buffer size (in units of bytes) for a related data radio bearer. Hereinafter, the desired buffer size may be referred to as a DBS.
c) "Desired Data Rate": A desired data rate associated with a specific data radio bearer configured for the UE.

When detecting successful random access channel (RACH) access of the UE to the data radio bearer, the corresponding node may transmit an initial DDDS frame to the node hosting the NR PDCP entity. The node hosting the NR PDCP entity may transmit DL downlink data before receiving the initial DDDS frame. In addition, when the corresponding frame is a report for the delivery status of the last downlink user data, the DDDS frame may include an indication indicating that the DDDS frame is the final frame. When receiving the indication indicating the final frame, the node hosting the NR PDCP entity may be considered that uplink or downlink data is no more transmitted between the corresponding node and the UE.

When receiving a DDDS frame, the node hosting the NR PDCP entity may transmit downlink user data having the size smaller than the above-described b) (i.e., the buffer size (e.g., DBS) desired by the corresponding node) to the corresponding node. In this case, the downlink user data to be transmitted to the corresponding node by the node hosting the NR PDCP entity is not limited to a value smaller than the above-described b). The node hosting the NR PDCP entity may also transmit downlink user data having the same size as the above-described b). However, when the DBS value is 0, the node hosting the NR PDCP entity may stop data transmission per bearer.

In the above-describe c) (e.g., the data rate desired by the corresponding node), a value of the desired data rate may refer, for example, to the amount of data (per second) to be received within a specific time. When receiving a DDDS frame, the node hosting the NR PDCP entity may transmit downlink user data to the corresponding node at the data rate less than the above-described c). In this case, the rate of the downlink user data to be transmitted to the corresponding node by the node hosting the NR PDCP entity is not limited to a value smaller than the above-described c). The node hosting the NR PDCP entity may transmit the downlink user data to the corresponding node at the same rate as the above-described c).

Information on the above-described DBS of b) and data rate of c) may be valid until the next DDDS frame is received. The corresponding node may remove a buffered NR PDCP PDU of an RLC AM bearer according to the successfully delivered feedback (e.g., DDDS) of the NR PDCP PDU. In the case of the RLC AM, after the highest NR PDCP PDUC sequence number sequentially and successfully transmitted is reported to the node hosting the NR PDCP entity through DDDS transmission, the corresponding node may remove each NR PDCP PDU. In the case of the RLC unacknowledged mode (UM), the corresponding node may remove each NR PDCP PDU after transmitting the highest NR PDCP PDU sequence number transmitted sequentially and successfully to a lower layer (e.g., one of a media access control (MAC) layer and a physical (PHY) layer).

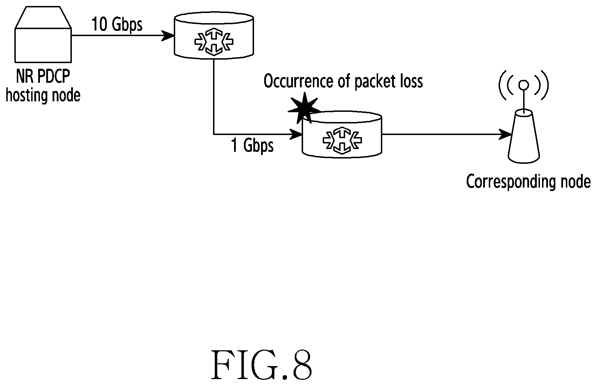

FIG. 8 is a diagram illustrating an example operation in which a packet loss occurs according to various embodiments.

Referring to FIG. 8, an operation in which a buffer overflow occurs by speed mismatch of a router included in a backhaul network when massive downlink traffic between a node hosting an NR PDCP entity and a corresponding node passes through a network (e.g., a backhaul network) between two nodes can be described. In the NR system, compared to the LTE system, the amount of traffic transmitted and/or received between the nodes may be very large. In the dual connectivity structure, in the backhaul network between the node hosting the NR PDCP entity and the corresponding node, a possibility that packet loss occurs during downlink transmission due to a buffer overflow problem may increase.

When the packet transmitted from the node hosting the NR PDCP entity to the corresponding node is lost, the corresponding node may detect (or identify) the packet loss. The corresponding node may report the occurrence of the packet loss to the node hosing the NR PDCP entity. In an embodiment, when the packet loss occurs, a message transmitted to the node hosting the NR PDCP entity may include a parameter indicating at least one of a range of NR-U sequence numbers reported to be lost, the start of the NR-U sequence number range, or the end of the NR-U sequence number range. For example, when the value of the sequence number range of the NR-U packet is 0, the values indicating the start of the NR-U sequence number range and the end of the NR-U sequence number range may not be included. When the value of the sequence number range of the NR-U sequence packet is 1, the values indicating the start of the NR-U sequence number range and the end of the NR-U sequence number range may be included. In this case, the length of the field of he parameter indicating the packet loss may have a 1-bit size.

The node hosting the NR PDCP entity, which has received the report of the packet loss from the corresponding node, may perform retransmission of the lost packet. The node hosting the NR PDCP entity may allocate a new NR-U sequence number to a retransmitted NR PDCP PDU. The node hosting the NR PDCP entity may display whether the NR-U packet is retransmission of the NR-PDCP PDU to the corresponding node.

The corresponding node may transmit the DDDS to the node hosting the NR PDCP entity in response to the reception of the NR-U packet retransmitted from the node hosting the NR PDCP entity. In this case, the DDDS may include at least one of the successfully retransmitted NR PDCP sequence number or the retransmitted NR PDCP sequence number (e.g., at least one of "Successfully delivered retransmitted NR PDCP Sequence Number" or "Retransmitted NR PDCP Sequence Number" in Table 2 above).

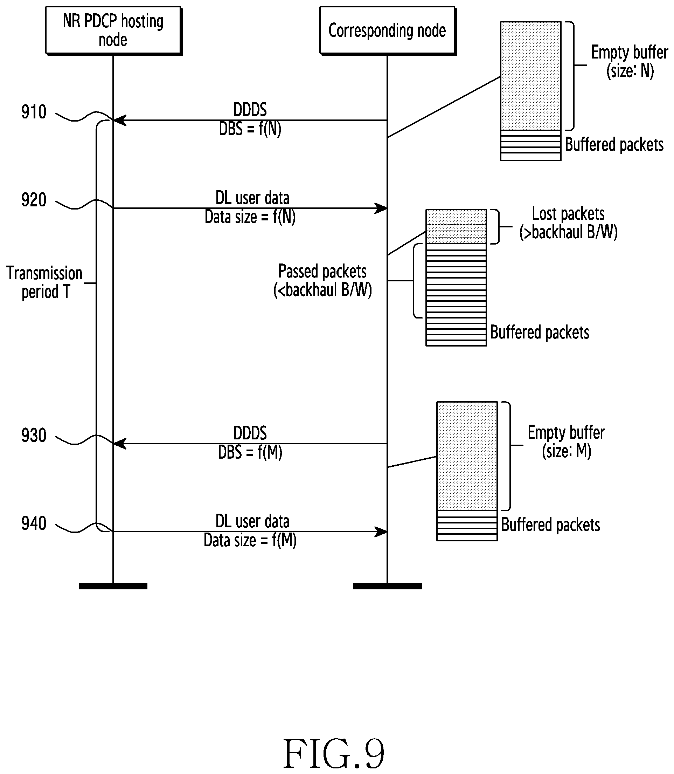

FIG. 9 is a signal flow diagram illustrating example flow of a signal when packet loss occurs according to various embodiments.

Hereinafter, a redundant description from FIG. 8 may not be repeated in the description of FIG. 9.

Referring to FIG. 9, a signal flow and a buffer state of a corresponding node are described when packet loss occurs during downlink transmission due to a buffer overflow problem in a network (e.g., a backhaul network) between a node hosting an NR PDCP entity and the corresponding node in the dual connectivity structure described in FIG. 8 above.

In operation 910, the corresponding node may transmit a DDDS to the node hosting the NR PDCP entity. In this case, when the size of an empty buffer of the corresponding node is N, a DBS included in the DDDS may be determined (or configured) (e.g., f(N)) based on N corresponding to the size of the empty buffer. Hereinafter, the corresponding node may configure or determine the DBS, and in this case, the terms "determination" and "configuration" may have the same meaning.

In operation 920, the node hosting the NR PDCP entity may transmit, to the corresponding node, downlink user data having the size (e.g., f(N)) corresponding to the DBS included in the DDDS received from the corresponding node. In this case, packets stored in the buffer of the corresponding node among the downlink user data may be smaller than a network bandwidth (e.g., a backhaul bandwidth), the lost packets may be greater than the network bandwidth (e.g., the backhaul bandwidth). The corresponding node having detected (or identified) the occurrence of loss of the downlink user data received from the node hosting the NR PDCP entity may perform the above-described operation of reporting the occurrence of the packet loss of FIG. 8. The node hosting the NR PDCP entity may perform an operation of retransmitting, based on the reporting of the occurrence of the packet loss, the lost downlink user data.

In operation 930, the corresponding node may transmit data stored in the buffer to another node (e.g., UE). When the size of the empty buffer after transmission is M, the corresponding node may transmit, to the node hosting the NR PDCP entity, the DDDS including the DBS (e.g., f(M)) configured based on M corresponding to the size of the empty buffer. In this case, the DDDS may include information on the retransmitted downlink user data among the downlink user data in operation 920 (e.g., a parameter indicating at least one of the range of the NR-U sequence number reported to be lost, the start of the NR-U sequence number range, or the end of the NR-U sequence number range). A time interval between a time point at which the corresponding node transmits the DDDS (e.g., operation 910) and a time point at which the corresponding node transmits the next DDDS (e.g., operation 930) may be referred to as T. In this case, T may refer, for example, to a transmission period of the DDDS.

In operation 940, the node hosting the NR PDCP entity may transmit, to the corresponding node, downlink user data having the size (e.g., f(M)) corresponding to the DBS included in the DDDS received from the corresponding node in operation 930.

In the above-described procedure, a delay may occur in the transmission of the downlink user data by the operation of requesting retransmission for the lost packet by the corresponding node, and it may be difficult to perform the operation (e.g., operation 930) of transmitting the next DDDS in the transmission period of the DDDS by the delay. Accordingly, a network load may occur according to the delay of the transmission of the downlink user data.

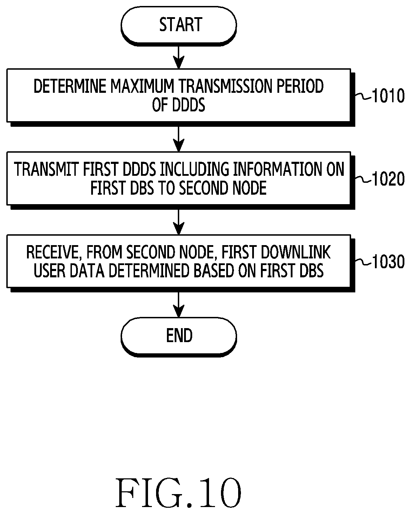

FIG. 10 is a flowchart illustrating an example DDDS transmission operation according to various embodiments.

Referring to FIG. 10, a first node may determine (or configure) a maximum transmission period of a DDDS as a method of reducing a network load by reducing loss of a packet received from a second node. Hereinafter, in an embodiment of FIG. 10, the first node may be a corresponding node, and the second node may be a node hosting an NR PDCP entity. Hereinafter, the first node may determine or configure a maximum transmission period of the DDDS, and in this case, the terms "determination" and "configuration" may have the same meaning.

In operation 1010, the first node (e.g., the corresponding node) may determine a maximum transmission period (TS) of the DDDS. For example, TS may have a value between 0 and transmission period T of the DDDS. However, when there is no possibility of the packet loss, the first node may configure the TS and the T with the same value. A first DBS included in a first DDDS may be configured as f(N)x(TS/T). Accordingly, the larger the maximum transmission period TS of the DDDS, the smaller the DBS, and thus the size of first downlink user data requested to be transmitted to the second node (e.g., the node hosting the NR PDCP entity) becomes smaller. Accordingly, when the occurrence of the packet loss is expected, the first node may determine a short maximum transmission period of the DDDS. That is, the first node may configure TS to be smaller than T, and may reduce the size of first downlink user data transmitted at one time.

In an embodiment, TS may be directly configured, based on information configured from a network operator, by the first node. In an embodiment, the network operator may measure the amount of downlink user data loss, and thus the network operator may directly configure, based on the amount of downlink user data loss, a TS value. Accordingly, the first node may determine the TS value received from the network operator as the maximum transmission period of the DDDS.

In an embodiment, the case where the occurrence of the packet loss is expected may refer, for example, to a case where packet loss has occurred in the previous downlink user data reception procedure. In an embodiment, the network operator may measure the amount of downlink user data loss, and thus the case where the occurrence of the packet loss is expected may refer, for example, to a case where the network operator configures the maximum transmission period of the DDDS for the base station according to the amount of the downlink user data loss,

In operation 1020, the first node may transmit a first DDDS to the second node. In this case, the first DDDS may include at least one of the pieces in Table 2 above, and the DBS included in the first DDDS may be a first DBS configured in operation 1010.

In operation 1030, the first node may receive, from the second node, first downlink user data determined based on the first DBS. In this case, the first downlink user data may have a size (e.g., f(N)xTS/T)) corresponding to the first DBS.

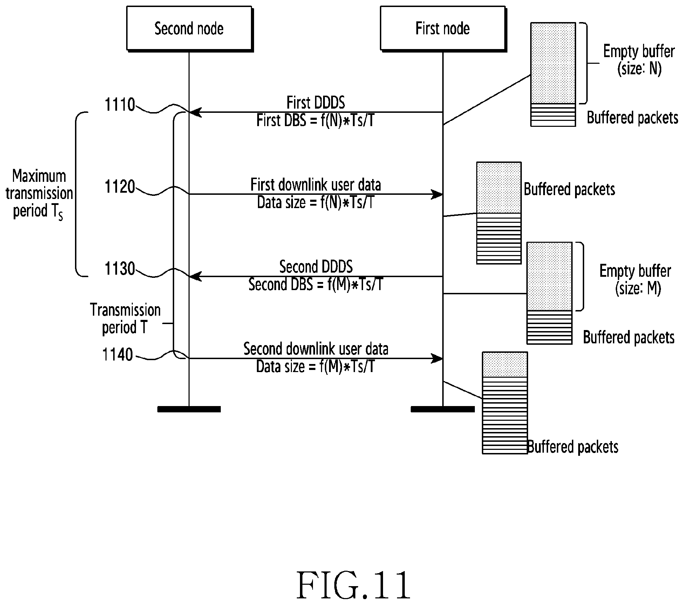

FIG. 11 is a signal flow diagram illustrating an example flow of a downlink signal based on a maximum transmission period of a DDDS according to various embodiments.

Referring to FIG. 11, when packet loss occurs during downlink transmission due to a buffer overflow problem in a network (e.g., a backhaul network) between a node hosting an NR PDCP entity and a corresponding node in a dual connectivity structure, operations of transmitting and/or receiving downlink user data based on the maximum transmission period of the DDDS configured according to the embodiment of FIG. 10 can be described. Hereinafter, in the example embodiment of FIG. 11, the first node may be a corresponding node, and the second node may be a node hosting the NR PDCP entity.

In operation 1110, the first node may determine a maximum transmission period of a DDDS, and may configure, based on the maximum transmission period of the DDDS, a size of a first DBS. For example, when the size of an empty buffer of the first node is N, the first DBS may be configured as f(N)x(TS/T). The first node may transmit a first DDDS including information on the first DBS to the second node. In this case, the maximum transmission period TS of the DDDS determined by the first node may be configured in the same method as the TS configuration method in the example embodiment of FIG. 10.

In operation 1120, the second node may transmit, to the first node, first downlink user data having the size (e.g., , f(N)x(TS/T)) corresponding to the first DBS included in the first DDDS received from the first node. Accordingly, the first downlink user data may be data having the size TS/T smaller than the downlink user data (e.g., f(N)) calculated based on the size (e.g., N) of the empty buffer, and thus there may be no data failing to be stored in the buffer of the first node and lost. However, the size of the first downlink user data is not necessarily limited to a size smaller than the downlink user data (e.g., f(N)) calculated based on the size (e.g., N) of the empty buffer, and when it is expected that the packet loss does not occur, the first downlink user data may be the same size as the downlink user data (e.g., f(N)) calculated based on the size (e.g., N) of the empty buffer. In addition, according to the above-described embodiment, the advantageous effect is not limited to no occurrence of packet loss, and a case where packet loss is reduced compared to the case where the downlink user data (e.g., f(N)) calculated based on the size (e.g., N) of the empty buffer is transmitted may be included.

In operation 1130, when the size of the empty buffer is M, the first node may transmit, to a second node, a second DDDS including information on a second DBS (e.g., f(M)x(TS/T)) configured based on the maximum transmission period of the DDDS configured in operation 1110.

In operation 1140, the second node may transmit, to the first node, second downlink user data having the size (e.g., f(M)x(TS/T)) corresponding to the second DBS included in the second DDDS received from the first node. Accordingly, the second downlink user data may be data having the size TS/T smaller than the downlink user data (e.g., f(M)) calculated based on the size (e.g., M) of the empty buffer, and thus, there may be no data failing to be stored in the buffer of the first node and lost. However, the size of the second downlink user data is not necessarily limited to the size smaller than the downlink user data (e.g., f(M)) calculated based on the size (e.g., M) of the empty buffer, and when it is expected no packet loss occurs, the second downlink user data may have the same size as the downlink user data (e.g., f(M)) calculated based on the size (e.g., M) of the empty buffer. In addition, according to the above-described embodiment, the advantageous effect is not limited to no occurrence of packet loss, and a case where packet loss is reduced compared to the case where the downlink user data (e.g., f(M)) calculated based on the size (e.g., M) of the empty buffer is transmitted may be included.

As described above, an example method of a first node in a wireless communication system according to various embodiments of the disclosure may include determining a maximum transmission period of a downlink data delivery status (DDDS), transmitting a first DDDS including information on a first desired buffer size (DBS) to a second node, and receiving first downlink data determined based on the first DBS from the second node, wherein the first DBS is determined based on the maximum transmission period and a size of an empty buffer of the first node.

According to various example embodiments of the disclosure, the method may further include after the maximum transmission period elapses, transmitting a second DDDS including information on a second DBS to the first node, and receiving second downlink data determined based on the second DBS from the second node, wherein the second DBS is determined based on the maximum transmission period and a size of an empty buffer of the first node after the maximum transmission period elapses.

According to various example embodiments of the disclosure, the second node may include a master node including a packet data convergence protocol (PDCP) layer, the first node may include a secondary node including a radio link control (RLC) layer, and the first downlink data and the second downlink data may include a PDCP protocol data unit (PDU).

According to various example embodiments of the disclosure, the maximum transmission period may be determined based on at least one of a status of a buffer of the first node or a speed of a router included in a path between the first node and the second node.

According to various example embodiments of the disclosure, the maximum transmission period may be smaller than a time interval until transmission of downlink data corresponding to a DBS is completed and a new DDDS is transmitted to the second node after a DDDS including the DBS determined based on the size of the empty buffer is transmitted to the second node.

As described above, an example method of a second node in a wireless communication system according to various embodiments of the disclosure may include receiving a first downlink data delivery status (DDDS) including information on a first desired buffer size (DBS) from a first node, and transmitting first downlink data corresponding to the first DBS to the first node, wherein the first DBS is determined based on a maximum transmission period of the first DDDS and a size of an empty buffer of the first node.

According to various example embodiments of the disclosure, the method may further include after the maximum transmission period elapses, receiving a second DDDS including information on a second DBS from the first node, and transmitting second downlink data corresponding to the second DBS to the first node, wherein the second DBS is determined based on the maximum transmission period and a size of an empty buffer of the first node after the maximum transmission period elapses.

According to various example embodiments of the disclosure, the second node may include a master node including a packet data convergence protocol (PDCP) layer, the first node may include a secondary node including a radio link control (RLC) layer, and the first downlink data and the second downlink data may include a PDCP protocol data unit (PDU).

According to various example embodiments of the disclosure, the maximum transmission period may be determined based on at least one of a status of a buffer of the first node or a speed of a router included in a path between the first node and the second node.

According to various example embodiments of the disclosure, the maximum transmission period may be smaller than a time interval until transmission of downlink data corresponding to a DBS is completed and a new DDDS is transmitted to the second node after a DDDS including the DBS determined based on the size of the empty buffer is transmitted to the second node.

As described above, a device for a first node in a wireless communication system according to various example embodiments of the disclosure may include a communication unit (transceiver), a memory, and a controller, wherein the controller is configured to: determine a maximum transmission period of a downlink data delivery status (DDDS), transmit a first DDDS including information on a first desired buffer size (DBS) to a second node; and receive first downlink data determined based on the first DBS from the second node, wherein the first DBS is determined based on the maximum transmission period and a size of an empty buffer of the first node.

According to various example embodiments of the disclosure, the controller may be configured to after the maximum transmission period elapses, transmit a second DDDS including information on a second DBS to the first node, and receive second downlink data determined based on the second DBS from the second node, wherein the second DBS is determined based on the maximum transmission period and a size of an empty buffer of the first node after the maximum transmission period elapses.

According to various example embodiments of the disclosure, the second mode may include a master node including a packet data convergence protocol (PDCP) layer, the first node may include a secondary node including a radio link control (RLC) layer, and the first downlink data and the second downlink data may include a PDCP protocol data unit (PDU).

According to various example embodiments of the disclosure, the maximum transmission period may be determined based on at least one of a status of a buffer of the first node or a speed of a router included in a path between the first node and the second node.

According to various example embodiments of the disclosure, the maximum transmission period may be smaller than a time interval until transmission of downlink data corresponding to a DBS is completed and a new DDDS is transmitted to the second node after a DDDS including the DBS determined based on the size of the empty buffer is transmitted to the second node.

As described above, a device for a second node in a wireless communication system according to various example embodiments of the disclosure may include a communication unit (transceiver), a memory, and a controller, wherein the controller is configured to receive a first downlink data delivery status (DDDS) including information on a first desired buffer size (DBS) from a first node, and transmit first downlink data corresponding to the first DBS to the first node, wherein the first DBS is determined based on a maximum transmission period of the first DDDS and a size of an empty buffer of the first node.

According to various example embodiments of the disclosure, the controller may be configured to after the maximum transmission period elapses, receive a second DDDS including information on a second DBS from the first node, and transmit second downlink data corresponding to the second DBS to the first node, wherein the second DBS is determined based on the maximum transmission period and a size of an empty buffer of the first node after the maximum transmission period elapses.

According to various example embodiments of the disclosure, the second node may include a master node including a packet data convergence protocol (PDCP) layer, the first node may include a secondary node including a radio link control (RLC) layer, and the first downlink data and the second downlink data may include a PDCP protocol data unit (PDU).

According to various example embodiments of the disclosure, the maximum transmission period may be determined based on at least one of a status of a buffer of the first node or a speed of a router included in a path between the first node and the second node.

According to various example embodiments of the disclosure, the maximum transmission period may be smaller than a time interval until transmission of downlink data corresponding to a DBS is completed and a new DDDS is transmitted to the second node after a DDDS including the DBS determined based on the size of the empty buffer is transmitted to the second node.

Methods disclosed in the claims and/or methods according to the various example embodiments described in the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described example embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

The various embodiments of the disclosure are merely examples that have been presented to easily explain the technical contents of embodiments of the disclosure and help understanding of embodiments of the disclosure, and are not intended to limit the scope of embodiments of the disclosure. Thus, it will be apparent to those skilled in the art that other variants based on the technical idea of the disclosure may be implemented. The above respective example embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the 5G or NR system, other variants based on the technical idea of the various example embodiments may also be implemented in other communication systems such as LTE or LTE-A systems.

In the drawings in which methods of the disclosure are described, the order of the description does not always correspond to the order in which steps of each method are performed, and the order relationship between the steps may be changed or the steps may be performed in parallel.

In the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the various embodiments set forth herein. Those skilled in the art will appreciate that other modifications and changes may be easily made to the forms of the disclosure without changing the technical idea or essential features of the disclosure. The scope of the disclosure includes the appended claims, and is not limited by the above detailed description, and the scope of the disclosure should be construed to include all changes or modifications derived from the meaning and scope of the claims and equivalents thereof.

## Claims

1. A method performed by a first node in a wireless communication system, the method comprising:
identifying a maximum transmission period of a downlink data delivery status (DDDS);
transmitting, to a second node, a first DDDS including information on a first desired buffer size (DBS); and
receiving, from the second node, first downlink data identified based on the first DBS,
wherein the first DBS is identified based on at least one of the maximum transmission period or a size of an empty buffer of the first node.

2. The method of claim 1, further comprising:
based on the maximum transmission period elapsing, transmitting, to the first node, a second DDDS including information on a second DBS; and
receiving, from the second node, second downlink data identified based on the second DBS,
wherein the second DBS is identified based on at least one of the maximum transmission period or a size of an empty buffer of the first node after the maximum transmission period elapses.

3. The method of claim 2, wherein the second node includes a master node including a packet data convergence protocol (PDCP) layer,
wherein the first node includes a secondary node including a radio link control (RLC) layer, and
wherein the first downlink data and the second downlink data include a PDCP protocol data unit (PDU).

4. The method of claim 1, wherein the maximum transmission period is identified based on at least one of a status of a buffer of the first node or a speed of a router included in a path between the first node and the second node.

5. A method performed by a second node in a wireless communication system, the method comprising:
receiving, from a first node, a first downlink data delivery status (DDDS) including information on a first desired buffer size (DBS); and
transmitting, to the first node, first downlink data corresponding to the first DBS,
wherein the first DBS is identified based on at least one of a maximum transmission period of the first DDDS or a size of an empty buffer of the first node.

6. The method of claim 5, further comprising:
based on the maximum transmission period elapsing, receiving a second DDDS including information on a second DBS from the first node; and
transmitting second downlink data corresponding to the second DBS to the first node,
wherein the second DBS is identified based on at least one of the maximum transmission period or a size of an empty buffer of the first node after the maximum transmission period elapses.

7. The method of claim 6, wherein the second node includes a master node including a packet data convergence protocol (PDCP) layer,
wherein the first node includes a secondary node including a radio link control (RLC) layer, and
wherein the first downlink data and the second downlink data include a PDCP protocol data unit (PDU).

8. The method of claim 5, wherein the maximum transmission period is identified based on at least one of a status of a buffer of the first node or a speed of a router included in a path between the first node and the second node.

9. A first node in a wireless communication system, the first node comprising:
a transceiver;
a processor coupled with the transceiver; and
memory storing instructions that, when executed by the processor, cause the first node device to:
identify a maximum transmission period of a downlink data delivery status (DDDS),
transmit a first DDDS including information on a first desired buffer size (DBS) to a second node, and
receive first downlink data identified based on the first DBS from the second node, and
wherein the first DBS is identified based on at least one of the maximum transmission period or a size of an empty buffer of the first node.

10. The first node of claim 9, wherein the instructions, when executed by the processor, cause the first node to:
based on the maximum transmission period elapsing, transmit a second DDDS including information on a second DBS to the first node, and
receive second downlink data identified based on the second DBS from the second node, and
wherein the second DBS is identified based on at least one of the maximum transmission period or a size of an empty buffer of the first node after the maximum transmission period elapses.

11. The first node of claim 10, wherein the second mode includes a master node including a packet data convergence protocol (PDCP) layer,
wherein the first node includes a secondary node including a radio link control (RLC) layer, and the first downlink data and
wherein the second downlink data include a PDCP protocol data unit (PDU).

12. The first node of claim 9, wherein the maximum transmission period is identified based on at least one of a status of a buffer of the first node or a speed of a router included in a path between the first node and the second node.

13. A second node in a wireless communication system, the second node comprising:
a transceiver;
a processor coupled with the transceiver; and
memory storing instructions that, when executed by the processor, cause the second node device to:
receive a first downlink data delivery status (DDDS) including information on a first desired buffer size (DBS) from a first node, and
transmit first downlink data corresponding to the first DBS to the first node, and
wherein the first DBS is identified based on at least one of a maximum transmission period of the first DDDS or a size of an empty buffer of the first node.

14. The second node of claim 13, wherein the instructions, when executed by the processor, cause the second node to:
based on the maximum transmission period elapsing, receive a second DDDS including information on a second DBS from the first node; and
transmit second downlink data corresponding to the second DBS to the first node, and
wherein the second DBS is identified based on at least one of the maximum transmission period or a size of an empty buffer of the first node after the maximum transmission period elapses.

15. The second node of claim 14, wherein the second node includes a master node including a packet data convergence protocol (PDCP) layer,
wherein the first node includes a secondary node including a radio link control (RLC) layer, and
wherein the first downlink data and the second downlink data include a PDCP protocol data unit (PDU).
